# EUROPEAN PATENT SPECIFICATION

(11) **EP 0 966 901 B1**
(45) Date of publication and mention of the grant of the patent: **17.11.2004**
(21) Application number: 99203321.7
(22) Date of filing: 18.12.1996
(51) Int. Cl.: A46B 7/06, A46B 9/04

(54) **Contouring toothbrush head**
Zahnbürste mit federnden Kopfteil
Tête de brosse à dents conformable

(30) Priority: 29.12.1995 US 8734 P
(43) Date of publication of application: 29.12.1999
(62) Divisional of application: 96944453.8
(73) Proprietor: Colgate-Palmolive Company, New York, N.Y. 10022 (US)
(72) Inventor: Hohlbein, Douglas, West Trenton, NJ 08628 (US)
(74) Representative: Prins, Adrianus Willem, Mr. Ir.

(56) References cited:
- EP-A- 0 336 641
- WO-A-92/17093
- WO-A-96/02165
- DE-A- 1 657 299
- DE-C- 3 840 136
- DE-U- 9 402 125
- FR-A- 1 247 433
- FR-A- 2 652 245
- GB-A- 189 335
- GB-A- 412 414
- GB-A- 647 924
- US-A- 2 685 703
- US-A- 3 188 672
- US-A- 5 373 602
- US-A- 5 393 796

## Description

### BACKGROUND OF THE INVENTION

This invention relates to a toothbrush according to claim 1.

Prior toothbrush constructions include toothbrush heads having pivoting or articulated sections joined together in a variety of constructions, such as a resilient strip of metal or the like, and also include pivoted or hinged articulated sections to provide a curved bristle configuration.

A curved/angled bristle surface configuration offers improved access to hard-to-reach areas such as the lingual surfaces of the front teeth, and behind the rear molars, placing more bristles in contact with the outer surfaces of the front teeth.

Many current brushes which have rigidly mounted bristles and a rigid curved/angled bristle surface exhibit an inherent disadvantage when brushing both flat as well as concave tooth surfaces. Placing a curved/angled bristle surface on flat tooth surfaces results in fewer bristles making contact with the teeth. These fewer bristles must support the brushing forces applied through the handle, which will result in premature splaying of the bristles. Some current toothbrushes have a "power tip" configuration (elongated rigidly mounted tip bristles) which are claimed to have improved access benefits.

### SUMMARY OF THE INVENTION

WO-A- 92/17093 discloses a toothbrush having an articulated head, comprising a series of segments, flexibly linked to each other by head material, provided for by parallel grooves in said head. The segments are the lands between the grooves. The grooves are wholly or partly filled with an elastomeric material for obtaining a desired flexibility and preventing accumulation of for example toothpaste in said grooves. The handle is of a straight, solid plastic configuration.

The handle may however be advantageously made in the form described in EP-A-0336641, the contents of which are included by reference in WO-A-92/17093.

FR-A-2 652 245 discloses a toothbrush having a straight, solid plastic handle and a first head section integrally molded and aligned with said handle, to which first section two further sections are flexibly linked by thin plastic bridges. The complete skeleton, comprising said handle and said three sections are integrally injection molded. No elastomeric material is used in this toothbrush.

An object of the present invention is to provide for a toothbrush having an articulated head and a good grip on the handle. To this end a toothbrush according to the present invention is characterized by the features of claim 1.

An advantage of the present flexible configuration is, in addition to the above noted features of a curved configuration, its inherent gentleness on the gums. When one brushes along the gumline with a power tip configuration, one focuses much of the force through the concentrated area at the raised tip. With the present configuration, this force is more evenly distributed.

To achieve the flexibility described above, the cross section of elastomer in the head may be convoluted, with one or more convolutes. To aid in fixing the elastomer to the toothbrush head sections, the elastomer may be configured to fit into one or more slots at both ends of the flexing area.

To minimize the gap between bristle tufts when the head is flexed into a flat configuration, it is desirable to position a plastic (resin) bridge between the tip and handle portions as near the bristle tips as possible. This bridge is straightened during flexing, and directly controls the gap between bristle tufts on each side of the flex area.

### BRIEF DESCRIPTION OF THE DRAWINGS

Figure 1 is a side elevational view illustrating the toothbrush head of this invention according to a first embodiment.
Figure 2 is a top plan view of the toothbrush head shown at Figure 1.
Figure 3 is an elevational view showing the head and tufts of bristles as brushing the inside surfaces of the lower teeth.
Figure 4 is a view similar to Figure 1 and shows a second embodiment.
Figure 6 is a side elevational view of a third embodiment.
Figure 7 is a side elevational view of a fourth embodiment.
Figure 8 is a side elevational view of a fifth embodiment.

### DETAILED DESCRIPTION OF THE INVENTION

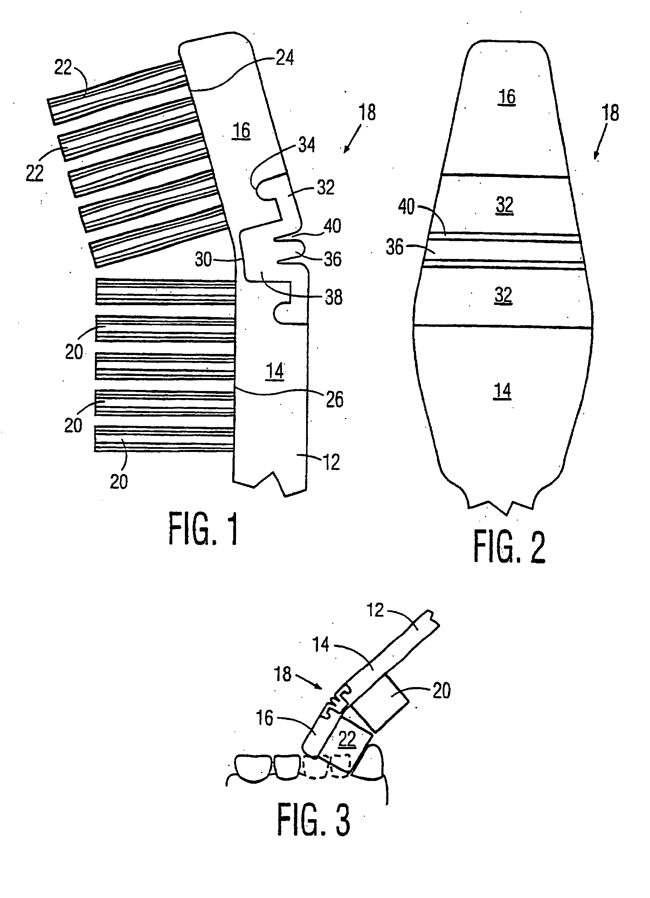

Referring now to Figure 1, a side elevational view of a toothbrush embodying the features and construction of this invention is shown in a vertical position, with a portion of the handle designated as 12. While not completely shown, the reader will understand that the handle extends downwardly and has a longitudinal axis. That portion of the head nearest the handle is designated as section 14 and is collinear with the handle, while that portion of the head most remote from the handle is designated as section 16. An elastomer section or joint between facing ends of sections 14 and 16 is denoted generally as 18. A plurality of tufts of bristles 20 extends at right angles to section 14, while a similar plurality of tufts of bristles 22 extends at right angles from section 16. Tufts of bristles 22 are thus at right angles to lower surface 24 of head section 16, while tufts of bristles 20 are perpendicular to lower or bottom surface 26 of head section 14.

A generally T-shaped groove, in longitudinal cross section, extends transversely across the upper or top surface of the head and is thus located between sections 14 and 16. The bottom of the central or main part of the groove is spaced from the lower surface of the composite head, leaving a thickness or bridge section designated as 30 which joins the lower portions of the two head sections. Bridge or zone 30 is typically of a thickness between 0,51 and 1,02 mm (20 and 40 thousandths of an inch). The handle and head sections are molded from a plastic or resin such as polypropylene. The generally T shaped groove is filled with a resilient and soft thermoplastic elastomer. The T groove has two symmetrical wing portions 32, each terminating in an enlarged portion 34, the latter extending towards respective groups of tufts or bristles. The middle of the T shaped resin insert section 18 includes an integral ridge 36, while the lower portion or base portion of the T section is designated as 38. The thermoplastic elastomer which forms section 18 may be a thermoplastic vulcanate (TPV) consisting of a mixture of polypropylene and EPDM (ethylene propylene diene monomers) which is available as Santoprene (brand), described in US patent 5,393,796 issued to Halberstadt et al, or Vyram (brand), another TPV consisting of a mixture of polypropylene and natural rubber, both Santoprene and Vyram (brands) being elastomers marketed by Advanced Elastomer Systems. Other suitable elastomers include Kraton, a brand of styrene block copolymer (SBC) marketed by Shell, and Dynaflex G 2706 (brand), a thermoplastic elastomer marketed by GLS Corporation and which is made with Kraton (brand) polymer. These and other suitable elastomers have, typically, a Shore A hardness of from about 13 to 94, with about 29 being a preferred hardness. Grooves 40, on the top surface of the composite head, extend on both sides of raised rib or ridge 36, and border sections 32. Figure 2 further illustrates the construction. It is seen that elastomer section 18 spans the width of the head sections.

In the normal configuration of the head, it is seen that head section 16 is tilted with respect to head section 14 at an angle, typically about 18° (which is equivalent to about 162°). Thus, a force exerted on the brush during brushing is required to tilt section 16 if it is to be more nearly or completely aligned with section 14. The two head sections may be molded in their angled configuration as shown at Figure 1, with the elastomer then added. Alternatively, the two head sections may be molded aligned with each other and then angled upon locating or injecting the elastomer between them.

Referring now to Figure 3, it is seen that the effective curvature of the two head sections 14 and 16 offers improved access to inner and rear surfaces of the teeth. Thus, handle 12 need not be inclined as much as otherwise in order for forward section 16 and its bristles 22 to engage interior surfaces of the lower front teeth. In brushing a straight section of teeth, the deformability of the elastomer section 18 permits section 16 to partially or completely align itself with handle 12 and section 14.

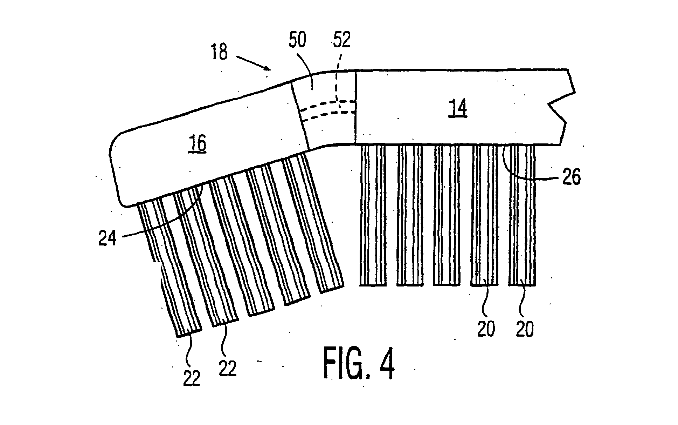

Figure 4 illustrates a second embodiment of the invention, there shown as horizontally disposed, and similar to that of Figures 1 and 2 except for a different construction for angularly joining the two head sections. The elastomer joint is again denoted as 18, with the elastomer itself denoted as 50 and being of the same composition as previously set out, and extends across the width of the head, and is located between the facing ends of sections 14 and 16. A thin integral bridge connection centrally between the two sections is designated as 52, typically being of cylindrical form in transverse cross section. Each end is integral with a respective head section. The elastomer is seen as completely surrounding bridge 52. This bridge connection may be, in transverse cross section, of any desired form. A top plan view of the head would be similar to Figure 2, except for the absence of grooves 40 and rib 36. As seen at Figure 4, the extent of the elastomer along the toothbrush longitudinal axis is shorter than that of Figures 1 and 2. Integral connection or bridge 52 performs the same function as bridge 30 of Figure 1, namely, integrally joining the two head sections.

The second embodiment yields the same cleaning action as shown at Figure 3. The thickness of bridge 52 is the same as that of bridge 30 of Figure 1.

It is seen that the bridges 30, 52 of the respective embodiments inhibit longitudinal separation of the two head sections by resisting tensile or other forces which might result in such separation, while the elastomer also controls the degree of flexing when head section 16 is subject to brushing forces. The function of the bridges is thus to tether the two head sections together, as well as to set them at an initial angle. When the sections move toward straightening or alignment, each elastomer section is deformed. Such deformation is resisted by the elastomer and to a lesser extent by the resin (polypropylene) bridges to that the sections revert to their normal, angled relationship upon the cessation of brushing force on forwardmost section 16.

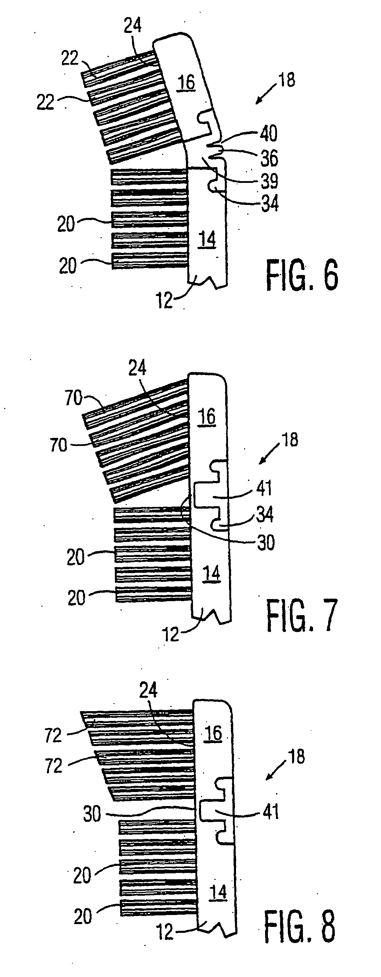

Figure 6 illustrates a third embodiment which differs from that shown in Figure 1 only in the absence of bridge 30 of Figure 1. Instead of bridge 30, the two head sections are coupled by T shaped elastomer section 39, the latter being of the same form as that of section 38 of Figure 1, except that it extends all the way to the lower surface of the head.

Figure 7 shows a fourth embodiment, here the two head sections 14 and 16 being normally aligned. A generally T shaped elastomeric section 41 forms a joint 18 which fills the spaces between the ends of the two head sections 14 and 16, except for bridge 30, identical with bridge 30 of Figure 1, which integrally tethers the two head sections together. Tufts of bristles 70 are slanted with respect to lower head surface 24 of head section 16, the slanting being towards handle 12. Tufts 70 are of successively different lengths, with the longest being near the most remote free end or tip of the head section 16. It is seen that the tips of bristle tufts 70 and 20 form a generally concave brushing surface which is at times, during brushing, flattened upon bending of joint 18.

Figure 8 illustrates a fifth embodiment, similar to that of Figure 7, and differs therefrom only in that the head section 16 tufts, here denoted as 72, extend orthogonally from surface 24. These latter tufts are, as tufts 70, of uniformly different lengths. The longest are near the free end of head section 16.

Again, the free ends of tufts 72 and 20 form a generally concave brushing surface which is at times, during brushing, flattened upon bending of joint 18.

Many toothbrushes available in the marketplace today are "dual component", by which is meant that an elastomeric material is used to a greater or lesser extent, particularly in the finger gripping portion of the brush. The elastomer could be introduced into the head area via a second injection point or gate located at the head, thereby' eliminating the need for a molded-in channel. The head may then be tufted using conventional staple technology.

In accordance with a method of manufacturing brushes according to the present invention, the handle and elastomer for the grip and the head areas are molded using a three-shot molding technique. The elastomer is introduced into the head area separately from the handgrip area. The elastomer for the head section of the brush and the hand grip section are different elastomeric materials having two different Shore hardness values. For example, in some circumstances, it may be desired to use a softer elastomer for the head area than for the handgrip portion of the brush. As above, the head may then be tufted using conventional staple technology.

## Claims

1. A toothbrush:
- having an articulated head and a handle (12), said head having two sections (14, 16) to thereby define a composite head having an upper and a lower surface;
- said two sections (14, 16) having respective longitudinally spaced ends facing each other;
- each said head sections (14, 16) having a plurality of tufts of bristles (20, 22; 20, 70; 20, 72) extending from a bottom surface (24, 26) thereof;
- an elastomer section (18) located between said spaced ends;
- which elastomer section (18) is deformed during brushing whenever said two head sections (14, 16) bend relative to each other;
- the head section (14) being nearest to the handle being collinear with the handle (12);
- the section furthest from the handle having a free end facing away from said handle;
- said elastomer section (18) being made of a first elastomeric material;
- the handle (12) having a handgrip area made of a second elastomeric material;
- the first and second elastomeric materials being different and having different shore hardness values.

2. A toothbrush according to claim 1, wherein the first elastomeric material (18) is softer than the second elastomeric material (18).

3. A toothbrush according to any one of claims 1-2, wherein the bottom surfaces (24, 26) of said sections (14, 16) enclose an angle in an unstressed state.

4. A toothbrush according to any one of claims 1-3, wherein said two sections (14, 16) are connected by a thin bridge (52) formed integrally with said two sections, said bridge being surrounded by said first elastomeric material.

5. A method to produce a toothbrush according to one of the previous claims, comprising the step of moulding a skeleton of a head and a handle (12) and locating or injecting a first elastomeric material (18) in part of the head, **characterized in** locating or injecting a second elastomeric material on part of the handle (12), wherein the first elastomeric material and the second elastomeric material are materials having different shore hardness values.

## Patentansprüche

1. Zahnbürste mit:
- einem abgewinkelten Kopf und einem Griff (12), wobei der Kopf zwei Abschnitte (14, 16) hat, um dadurch einen Verbundkopf mit einer oberen und einer unteren Fläche zu bilden;
- wobei die zwei Abschnitte (14, 16) jeweils in Längsrichtung beabstandete Enden haben, die einander zugewandt sind;
- wobei jeder Kopfabschnitt (14, 16) eine Anzahl von Borstenbündeln (20, 22; 20, 70; 20, 72) aufweist, die sich von einer Bodenfläche (24, 26) erstrecken;
- einem Elastomerabschnitt (18), der zwischen den beabstandeten Enden liegt;
- wobei der Elastomerabschnitt (18) während des Bürstens verformt wird, wenn sich die beiden Kopfabschnitte (14, 16) in Bezug aufeinander verbiegen;
- wobei der Kopfabschnitt (14), der dem Griff am nächsten liegt, mit dem Griff (12) kolinear ist;
- während der Abschnitt, der vom Griff am weitesten entfernt ist, ein freies Ende hat, das von dem Griff weggerichtet ist;
- wobei der Elastomerabschnitt (18) aus einem ersten elastomeren Stoff gemacht ist;
- und wobei der Griff (12) einen Handgriffsbereich besitzt, der aus einem zweiten elastomeren Stoff gebildet ist;
- wobei sich die ersten und zweiten elastomeren Stoffe voneinander unterscheiden und unterschiedliche Shore-Härten haben.

2. Zahnbürste nach Anspruch 1, wobei der erste elastomere Stoff (18) weicher als der zweite elastomere Stoff (18) ist.

3. Zahnbürste nach einem der Ansprüche 1-2, wobei die Bodenfläche (24, 26) der Abschnitte (14, 16) im unbelasteten Zustand einen Winkel bildet.

4. Zahnbürste nach einem der Ansprüche 1-3, wobei die beiden Abschnitte (14, 16) durch eine dünne Brücke (52) verbunden sind, die einstückig mit den zwei Abschnitten gebildet ist, wobei die Brücke von dem ersten elastomeren Stoff umgeben ist.

5. Verfahren zum Herstellen einer Zahnbürste mit einem der vorhergehenden Ansprüche, mit dem Schritt des Formens eines Gerüsts von einem Kopf und einem Griff (12) und durch Anbringen oder Anspritzen eines ersten elastomeren Stoffs (18) in einem Teil des Kopfes, **dadurch gekennzeichnet, dass** ein zweiter elastomere Stoff auf einem Teil des Griffs (12) angebracht oder angespritzt wird, wobei der erste elastomere Stoff und der zweite elastomere Stoff Stoffe mit unterschiedlicher Shore-Härte sind.

## Revendications

1. Brosse à dents :
- possédant une tête articulée et une poignée (12), ladite tête possédant deux sections (14, 16) afin de définir ainsi une tête composite possédant une surface supérieure et une surface inférieure ;
- lesdites deux sections (14, 16) possédant des extrémités respectives espacées longitudinalement et opposées les unes aux autres ;
- chacune desdites sections de tête (14, 16) possédant une pluralité de touffes de poils (20, 22 ; 20, 70 ; 20, 72) qui s'étendent à partir d'une surface de fond (24, 26) de celle-ci ;
- une section en élastomère (18) située entre lesdites extrémités espacées ;
- laquelle section en élastomère (18) est déformée au cours du brossage, chaque fois que lesdites deux sections de tête (14, 16) s'incurvent l'une par rapport à l'autre ;
- la section de tête (14) la plus proche de la poignée étant colinéaire avec la poignée (12) ;
- la section la plus éloignée de la poignée possédant une extrémité libre ne faisant pas face à ladite poignée ;
- ladite section en élastomère (18) étant constituée d'un premier matériau élastomère ;
- la poignée (12) possédant une zone de prise constituée d'un second matériau élastomère ;
- les premier et second matériaux élastomères étant différents, et ayant des valeurs de dureté Shore différentes.

2. Brosse à dents selon la revendication 1, dans laquelle le premier matériau élastomère (18) est plus mou que le second matériau élastomère (18).

3. Brosse à dents selon l'une quelconque des revendications 1 ou 2, dans laquelle les surfaces de fond (24, 26) desdites sections (14, 16) enclavent un angle dans un état exempt de contrainte.

4. Brosse à dents selon l'une quelconque des revendications 1 à 3, dans laquelle deux sections (14, 16) sont raccordées par un mince pont (52) formé en une seule pièce avec lesdites deux sections, ledit pont étant entouré du dit premier matériau élastomère.

5. Procédé de fabrication d'une brosse à dents selon l'une quelconque des revendications précédentes, comprenant l'étape du moulage d'une ossature d'une tête et d'une poignée (12) et du placement ou de l'injection d'un premier matériau élastomère (18) dans une partie de la tête, **caractérisé par** le placement ou l'injection d'un second matériau élastomère sur une partie de la poignée (12), dans lequel le premier matériau élastomère et le second matériau élastomère sont des matériaux ayant des valeurs de dureté Shore différentes.
